**Europäisches Patentamt**

**European Patent Office**

**Office européen des brevets**

(19)

(11) Veröffentlichungsnummer : **0 468 950 A2**

## (12) EUROPÄISCHE PATENTANMELDUNG

(21) Anmeldenummer : **91890136.4**

(22) Anmeldetag : **01.07.91**

(51) Int. Cl.$^5$ : **C21C 5/56**

(30) Priorität : **16.07.90 AT 1505/90**

(43) Veröffentlichungstag der Anmeldung :
**29.01.92 Patentblatt 92/05**

(84) Benannte Vertragsstaaten :
**BE CH DE DK ES FR GB GR IT LI LU NL SE**

(71) Anmelder : **VOEST-ALPINE STAHL
AKTIENGESELLSCHAFT**
**Turmstrasse 45**
**A- 4020 Linz a.d. Donau (AT)**

(72) Erfinder : **Weber, Alfred**
**Semmelweisstrasse 2**
**A-4222 Luftenberg (AT)**
Erfinder : **Auer, Johann**
**Leitnerberg 21**
**A-4490 St. Florian (AT)**
Erfinder : **Pirklbauer, Wilfried**
**Schmidberg 13**
**A-4491 Niederneukirchen (AT)**

(74) Vertreter : **Wolfram, Gustav, Dipl.-Ing.**
**Schwindgasse 7 P.O. Box 205**
**A-1041 Wien (AT)**

(54) **Anlage zur Herstellung von flüssigen Metallen.**

(57)    Eine Anlage zur Herstellung von flüssigen Metallen weist ein Schmelzgefäß (1) und ein die Schmelze aus dem Schmelzgefäß (1) aufnehmendes metallurgisches Gefäß (16) zur Nachbehandlung der Schmelze auf, wobei das Schmelzgefäß (1) mit einem in Höhe des Bodens (6) des Schmelzgefäßes (1) angeordneten und seitlich vom Schmelzgefäß (1) auskragenden Erker (7) mit einer Abstichöffnung (9) für die Schmelze versehen ist, die oberhalb einer Eingießöffnung (22) des metallurgischen Gefäßes (16) in Stellung gebracht ist.

Damit die aus dem Schmelzgefäß (1) austretende Schmelze nur über eine geringe Fallhöhe fällt und das Schmelzen kontinuierlich und unabhängig von der Weiterbehandlung der Schmelze erfolgen kann, trägt das dem Schmelzgefäß (1) nachgeordnete metallurgische Gefäß (16) einen seitlich des metallurgischen Gefäßes (16) vorstehenden, die Eingießöffnung aufweisenden Erker (18) und ist der Erker (7) des Schmelzgefäßes (1) oberhalb des Erkers (18) des metallurgischen Gefäßes (16) angeordnet.

EP 0 468 950 A2

FIG.1

Die Erfindung betrifft eine Anlage zur Herstellung von flüssigen Metallen, insbesondere von Stahl, mit einem Schmelzgefäß und einem die Schmelze aus dem Schmelzgefäß aufnehmenden metallurgischen Gefäß zur Nachbehandlung der Schmelze, wobei das Schmelzgefäß einen in Höhe des Bodens des Schmelzgefäßes angeordneten und seitlich vom Schmelzgefäß auskragenden Erker mit einer Abstichöffnung für die Schmelze aufweist, die oberhalb einer Eingießöffnung des metallurgischen Gefäßes in Stellung gebracht ist.

Eine Anlage dieser Art ist aus der EP-A 2 321 443 bekannt. Das Schmelzgefäß ist bei der bekannten Anlage als kippbarer Schrott und/oder Roheisen aufschmelzender Konverter ausgebildet, dessen in Höhe des Bodens angeordneter Erker über einer Pfanne in Stellung gebracht ist. Zwar erfolgt bei dieser Anlage das Erschmelzen flüssigen Metalls in einem kontinuierlichen Vorgang, jedoch ist es erforderlich, während des Pfannenwechsels den Konverter zu kippen, bis die Abstichöffnung oberhalb des Schmelzspiegels liegt, sodaß der kontinuierliche Abstichvorgang und der Schmelzvorgang unterbrochen ist.

Aus der EP-B1 199 714 ist eine Anlage bekannt, mit der Eisenschwamm in einem Elektroofen eingeschmolzen und die Schmelze über eine auskragende Abstichrinne in eine Pfanne eingegossen wird, in der die weitere Behandlung der Schmelze, wie eine Entphosphorung und eine Zugabe von Legierungskomponenten erfolgt. Hier erfolgen der Schmelzvorgang und die Nachbehandlung diskontinuierlich. Bei beiden bekannten Anlagen ergibt sich eine große Fallhöhe beim Abstich der Schmelze und damit eine starke Durchmischung in der dem Schmelzgefäß nachgeordneten Pfanne.

Die Erfindung stellt sich die Aufgabe, eine Anlage der eingangs beschriebenen Art dahingehend weiter zu bilden, daß der Schmelzvorgang kontinuierlich und ohne Rücksicht auf die Weiterbehandlung der Schmelze erfolgen kann, wobei die aus dem Schmelzgefäß austretende Schmelze nur über eine geringe Fallhöhe fällt.

Diese Aufgabe wird erfindungsgemäß dadurch gelöst, daß das dem Schmelzgefäß nachgeordnete metallurgische Gefäß einen seitlich des metallurgischen Gefäßes vorstehenden, die Eingießöffnung aufweisenden Erker trägt und daß der Erker des Schmelzgefäßes oberhalb des Erkers des metallurgischen Gefäßes angeordnet ist.

Gemäß einer bevorzugten Ausführungsform, bei der die Nachbehandlung der Schmelze diskontinuierlich erfolgt, ist das metallurgische Gefäß kippbar und weist die Eingießöffnung des Erkers des metallurgischen Gefäßes eine die Kippbewegung des metallurgischen Gefäßes zulassende Dimension auf.

Zur Vermeidung von Wärmeverlusten und zum Schutz des aus dem Schmelzgefäß austretenden Gießstrahles ist zweckmäßig die Eingießöffnung des metallurgischen Gefäßes von einer während des Kippens stationär verbleibenden Haube mit einer engen Durchtrittsöffnung für den aus dem Erker des Schmelzgefäßes austretenden Gießstrahl bedeckt, deren Innenkontur der beim Kippen des metallurgischen Gefäßes erfolgenden Bewegung des Erkers angepaßt ist.

Eine besonders einfache Ausführungsform ist dadurch gekennzeichnet, daß die Kippbewegung des metallurgischen Gefäßes um eine Achse erfolgt, die durch die Längsachse des Erkers des metallurgischen Gefäßes verläuft oder zu ihr parallel ist.

Vorteilhaft ist zwecks einfacher Wartung und Reparatur die Haube ein von den beiden Erkern unabhängiger Bauteil, wobei die Haube vorteilhaft an einem verfahrbaren Wagen montiert ist.

Um auch bei beengten Platzverhältnissen einen optimalen Schutz des Gießstrahls zu ermöglichen, ist zweckmäßig die Haube an ihrer Oberseite mit einem die Durchtrittsöffnung durch die Haube verlängernden Schutzrohr für den Gießstrahl versehen, wobei vorteilhaft das Schutzrohr an der Haube um eine parallel zur Durchtrittsöffnung gerichtete Achse verschwenkbar angeordnet ist.

Eine besonders platzsparende Ausführungsform ist dadurch gekennzeichnet, daß der die Haube tragende Wagen auf einem Niveau zwischen dem Boden des Schmelzgefäßes und dem Boden des metallurgischen Gefäßes verfahrbar ist, wobei vorteilhaft der Wagen unterhalb des Schmelzgefäßes bei in Betriebsposition gebrachter Haube in Stellung gebracht ist.

Eine optimale Verfügbarkeit des Schmelzgefäßes ist gewährleistet, wenn der Erker des Schmelzgefäßes am Schmelzgefäß mittels einer Schnellösungskupplung befestigt ist, wobei es zwecks einfachen Austausches des Erkers von Vorteil ist, wenn der Erker des Schmelzgefäßes mittels eines am Schmelzgefäß angeordneten Seilzuges in vertikaler Richtung verbringbar ist.

Ein vorteilhaftes Verfahren zum Herstellen von Metallschmelze, insbesondere von Stahl mit einer erfindungsgemäßen Anlage, ist dadurch gekennzeichnet, daß die Schmelze aus dem Schmelzgefäß kontinuierlich in das metallurgische Gefäß gefördert und nach einer Feinungsbehandlung aus dem Schmelzgefäß diskontinuierlich abgezogen wird.

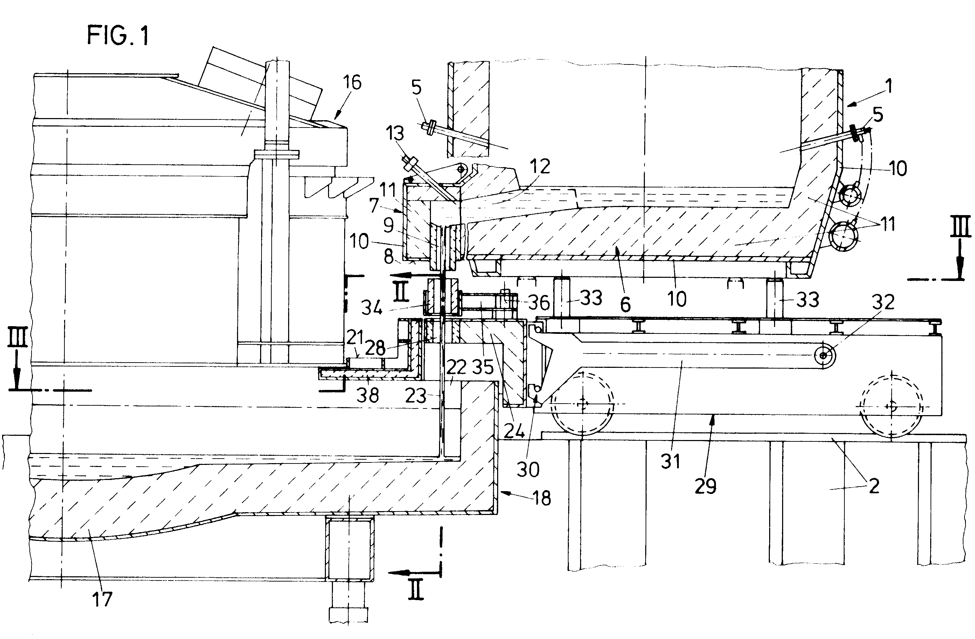

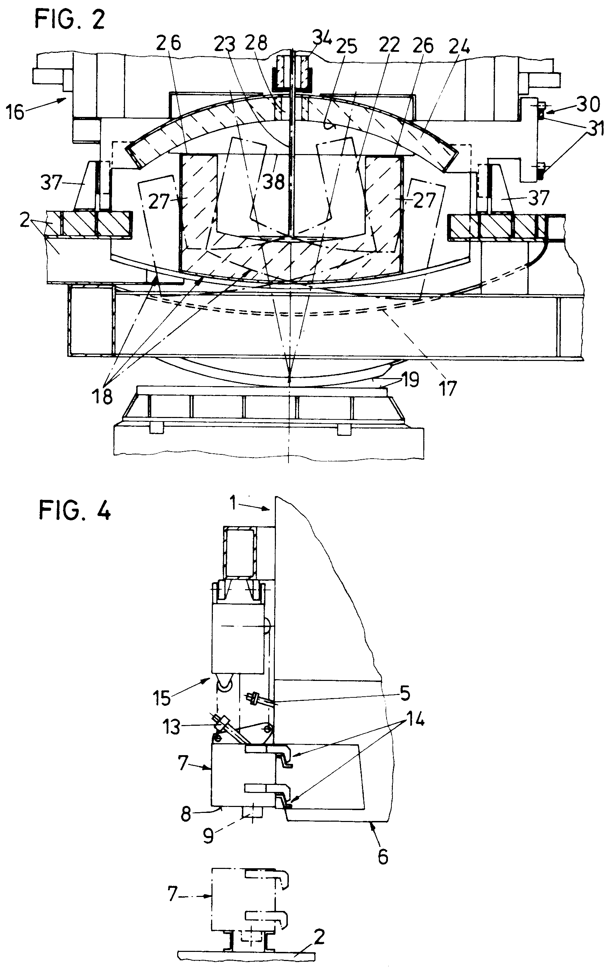

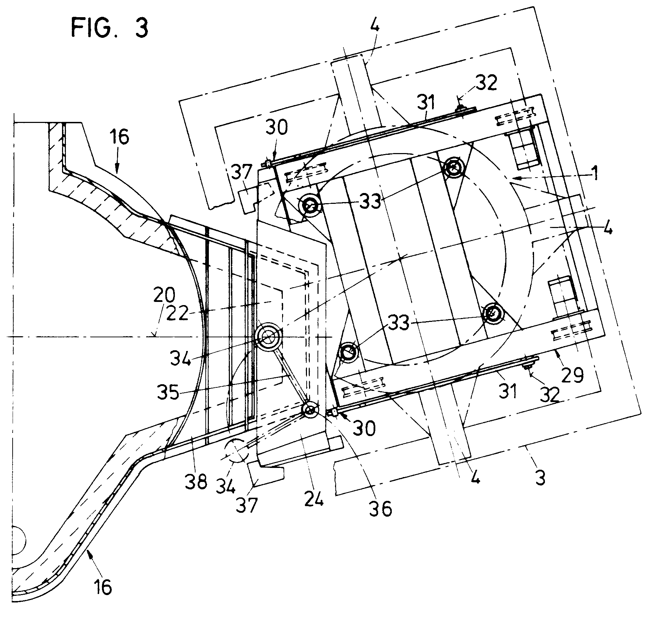

Die Erfindung ist nachfolgend anhand einer Zeichnung eines Ausführungsbeispieles näher erläutert, wobei Fig. 1 eine Anlage zum Herstellen von Stahl teilweise in Seitenansicht und teilweise geschnitten zeigt. Fig. 2 veranschaulicht einen gemäß der Linie II-II der Fig. 1 geführten Schnitt. Fig. 3 zeigt einen Schnitt, der gemäß der Linie III-III der Fig. 1 geführt ist. Fig. 4 ist eine Seitenansicht eines Details eines Schmelzgefäßes.

Mit 1 ist ein ortsfest abgestütztes Schmelzgefäß bezeichnet, welches von einem an einer Bühne 2 abgestützten Rahmen 3 über um seinen Umfang seitlich auskragende und am Umfang verteilt angeordnete Pratzen 4 abgestützt ist.

Dieses Schmelzgefäß 1 ist mittels Brenner 5 beheizbar. In Höhe des Bodens 6 des Schmelzgefäßes 1 ist ein ebenfalls über den Umfang seitlich auskragender Erker 7 vorgesehen, der an seiner Unterseite 8 eine vertikal nach unten offene Abstichöffnung 9 aufweist. Sowohl das Schmelzgefäß 1 als auch der Erker 7 weisen einen Metallaußenmantel 10 auf und sind mit einer feuerfesten Auskleidung 11 versehen. In den Erker 7 mündet ein vom Boden 6 ausgehender, leicht fallend angeordneter und radial in Richtung zum Erker 7 gerichteter Ausgießkanal 12, der in die Abstichöffnung 9 übergeht.

An dem Erker 7 kann, wie in Fig. 1 veranschaulicht, eine Heizeinrichtung 13 vorgesehen sein. Der Erker 7 ist am Schmelzgefäß lösbar befestigt und zwar mittels einer Hakenkupplung 14, die insbesondere aus Fig. 4 ersichtlich ist.

Um den Erker 7 möglichst rasch vom Schmelzgefäß 1 lösen zu können und einen neuen Erker 7 in einer kurzen Zeitspanne an dem Schmelzgefäß 1 anbringen zu können, ist knapp oberhalb des Erkers 7 ein Seil- oder Kettenzug 15 angeordnet, mit dem der Erker 7 in vertikaler Richtung bewegt werden kann.

Seitlich neben dem Schmelzgefäß 1 ist ein als Elektroofen 16 ausgebildetes metallurgisches Gefäß zum Raffinieren der Schmelze angeordnet, dessen gewölbter Boden 17 nach der Seite des Schmelzgefäßes 1 radial verlängert ist, sodaß ein über dem Umfang des Elektroofens 16 vorstehender Erker 18 gebildet ist. Der Erker 18 befindet sich somit etwa in Höhe des Bodens 17 des Elektroofens 16; er könnte jedoch auch auf einem etwas höheren Niveau angeordnet sein.

Der Elektroofen 16 ist am Fundament über Wälzbahnen 19 kippbar gelagert, wobei die Kippachse parallel zur Längsachse 20 seines Erkers 18 verläuft. Die den Elektroofen bewegende Kippeinrichtung ist von herkömmlicher Art und zur besseren Übersichtlichkeit nicht näher dargestellt.

Der Erker 18 des Elektroofens 16 weist an seiner Oberseite 21 eine Eingießöffnung 22 auf, die derart dimensioniert ist, daß der aus dem Erker 7 des Schmelzgefäßes 1 austretende Gießstrahl 23 auch während einer Kippbewegung des Elektroofens 16 in den Erker 18 trifft.

Zur Vermeidung von Wärmeverlusten und zum Schutz des Gießstrahls 23 ist die relativ weite Eingießöffnung 22 des Erkers 18 von einer feuerfest ausgekleideten Haube bedeckt. Diese Haube 24 weist eine Innenkontur 25 auf, die der beim Kippen des Elektroofens stattfindenden Bewegung der oberen Enden 26 der Seitenwände 27 des Erkers 18 angepaßt ist, beispielsweise als Zykloide ausgebildet ist. Mittig der Haube 24 ist eine enge Durchtrittsöffnung 28 für den Gießstrahl 23 vorgesehen. Die Haube 24 weist eine solche Dimension auf, daß die gesamte Eingießöffnung 22 des Erkers 18 in jeder Kipposition des Elektroofens 16 (vgl. die in Fig. 2 strichpunktiert dargestellten Kipplagen des Erkers 18) zuverlässig abgedeckt ist.

Die Haube 24 ist bei dem dargestellten Ausführungsbeispiel ein eigener Bauteil, der sowohl unabhängig vom Schmelzgefäß 1 als auch unabhängig vom Elektroofen 16 ausgebildet ist; sie ist an einem horizontal verfahrbaren Wagen 29 mittels einer Hakenkupplung 30 befestigt. Die Hakenkupplung 30 befindet sich am freien Ende eines in vertikaler Richtung verschwenkbaren Schwenkarms 31, der am Wagen 29 in der Nähe des der Haube 24 gegenüberliegenden Endes um eine horizontale Achse 32 schwenkbar gelagert ist.

Dieser Wagen 29 kann in einem Raum unterhalb des Schmelzgefäßes 1 in Stellung gebracht werden, wodurch auch beengten Platzverhältnissen Rechnung getragen werden kann. Zur Fixierung des Wagens 29 mit in Gießstellung gebrachter Haube 24 (Fig. 1), dienen am Wagen angeordnete heb- und senkbare Stempel 33, die sich an der Unterseite des Schmelzgefäßes 1 abstützen und so den Wagen 29 in seiner Position blockieren.

An der Oberseite der Haube 24 ist ein zwischen dieser und dem Erker 7 des Schmelzgefäßes 1 angeordnetes Gießrohr 34 vorgesehen, sodaß der Gießstrahl 23 zwischen dem Austritt aus der Abstichöffnung 9 des Erkers 7 und dem Eintritt in die Durchtrittsöffnung 28 der Haube 24 ebenfalls geschützt ist. Dieses Gießrohr 34 ist an einem Schwenkarm 35 befestigt, der um eine vertikale Achse 36, die an der Haube 24 seitlich angeordnet ist, in horizontaler Richtung von einer Gießposition, die in Fig. 3 mit vollen Linien dargestellt ist, in eine in Fig. 3 mit strichlierten Linien dargestellte Ruheposition schwenkbar ist.

Es wäre auch möglich, ohne Gießrohr 34 auszukommen, nämlich die beiden Erker 7 und 18 knapp übereinander anzuordnen. Die schwenkbare Anordnung des Gießrohres 34 ermöglicht ein einfaches in Stellung bringen der Haube zwischen den beiden Erkern 7 und 18. Zudem können das verschleißanfällige Gießrohr 34 und der in der Haube eingesetzte Rohrteil, der die Durchlaßöffnung 28 bildet, leicht ausgetauscht werden.

Die höhenverstellbare Anordnung der Haube am Wagen 29 ermöglicht ein rasches und problemloses in Stellung bringen der Haube 24 möglichst knapp oberhalb des Erkers 18 des Elektroofens 16, ohne daß hierbei Beschädigungen zu befürchten sind.

An der Bühne 2 sind vorteilhaft Anschläge 37 vorgesehen, gegen die die Haube 24 mittels des Wagens 29 fahrbar ist, sodaß die Haube stets in eine bestimmte Position gefahren wird, in der das dem Elektroofen 16 zugewendete Ende der Haube 24 möglichst knapp neben einer den Erker bis zu dessen Eintrittsöffnung 22 bedeckenden Deckwand 38 zu liegen kommt.

## Patentansprüche

1. Anlage zur Herstellung von flüssigen Metallen, insbesondere von Stahl, mit einem Schmelzgefäß (1) und einem die Schmelze aus dem Schmelzgefäß (1) aufnehmenden metallurgischen Gefäß (16) zur Nachbehandlung der Schmelze, wobei das Schmelzgefäß (1) einen in Höhe des Bodens (6) des Schmelzgefäßes (1) angeordneten und seitlich vom Schmelzgefäß (1) auskragenden Erker (7) mit einer Abstichöffnung (9) für die Schmelze aufweist, die oberhalb einer Eingießöffnung (22) des metallurgischen Gefäßes (16) in Stellung gebracht ist, dadurch gekennzeichnet, daß das dem Schmelzgefäß (1) nachgeordnete metallurgische Gefäß (16) einen seitlich des metallurgischen Gefäßes (16) vorstehenden, die Eingießöffnung (22) aufweisenden Erker (18) trägt und daß der Erker (7) des Schmelzgefäßes (1) oberhalb des Erkers (18) des metallurgischen Gefäßes (16) angeordnet ist.

2. Anlage nach Anspruch 1, dadurch gekennzeichnet, daß das metallurgische Gefäß (16) kippbar ist und daß die Eingießöffnung (22) des Erkers (18) des metallurgischen Gefäßes (16) eine die Kippbewegung des metallurgischen Gefäßes (16) zulassende Dimension aufweist.

3. Anlage nach Anspruch 2, dadurch gekennzeichnet, daß die Eingießöffnung (22) des metallurgischen Gefäßes (16) von einer während des Kippens stationär verbleibenden Haube (24) mit einer engen Durchtrittsöffnung (28) für den aus dem Erker (7) des Schmelzgefäßes (1) austretenden Gießstrahl (23) bedeckt ist, deren Innenkontur (25) der beim Kippen des metallurgischen Gefäßes (1) erfolgenden Bewegung des Erkers (18) angepaßt ist.

4. Anlage nach Anspruch 2 oder 3, dadurch gekennzeichnet, daß die Kippbewegung des metallurgischen Gefäßes (16) um eine Achse erfolgt, die durch die Längsachse (20) des Erkers (18) des metallurgischen Gefäßes (16) verläuft oder zu ihr parallel ist.

5. Anlage nach Anspruch 3 oder 4, dadurch gekennzeichnet, daß die Haube (24) ein von den beiden Erkern (7,18) unabhängiger Bauteil ist.

6. Anlage nach Anspruch 5, dadurch gekennzeichnet, daß die Haube (24) an einem verfahrbaren Wagen (29) montiert ist.

7. Anlage nach einem oder mehreren der Ansprüche 3 bis 6, dadurch gekennzeichnet, daß die Haube (24) an ihrer Oberseite mit einem die Durchtrittsöffnung (28) durch die Haube (24) verlängernden Schutzrohr (34) für den Gießstrahl (23) versehen ist.

8. Anlage nach Anspruch 7, dadurch gekennzeichnet, daß das Schutzrohr (34) an der Haube (24) um eine parallel zur Durchtrittsöffnung (28) gerichtete Achse (36) verschwenkbar angeordnet ist.

9. Anlage nach einem oder mehreren der Ansprüche 6 bis 8, dadurch gekennzeichnet, daß der die Haube (24) tragende Wagen (29) auf einem Niveau zwischen dem Boden (6) des Schmelzgefäßes (1) und dem Boden (17) des metallurgischen Gefäßes (16) verfahrbar ist.

10. Anlage nach einem oder mehreren der Ansprüche 6 bis 9, dadurch gekennzeichnet, daß der Wagen (29) unterhalb des Schmelzgefäßes (1) bei in Betriebsposition gebrachter Haube (24) in Stellung gebracht ist.

11. Anlage nach einem oder mehreren der Ansprüche 1 bis 10, dadurch gekennzeichnet, daß der Erker (7) des Schmelzgefäßes (1) am Schmelzgefäß (1) mittels einer Schnellösungskupplung (14) befestigt ist.

12. Anlage nach Anspruch 11, dadurch gekennzeichnet, daß der Erker (7) des Schmelzgefäßes (1) mittels eines am Schmelzgefäß (1) angeordneten Seilzuges (15) in vertikaler richtung verbringbar ist.

13. Verfahren zum Herstellen von Metallschmelze, insbesondere von Stahl, mit einer Einrichtung nach einem oder mehreren der Ansprüche 1 bis 12, dadurch gekennzeichnet, daß die Schmelze aus dem Schmelzgefäß (1) kontinuierlich in das metallurgische Gefäß (16) gefördert und nach einer Feinungsbehandlung aus dem Schmelzgefäß (1) diskontinuierlich abgezogen wird.

FIG.1

FIG. 2

FIG. 4

FIG. 3